# EUROPÄISCHE PATENTANMELDUNG

(11) **EP 2 989 874 A1**
(43) Veröffentlichungstag der Anmeldung: **02.03.2016**
(21) Anmeldenummer: 15401088.8
(22) Anmeldetag: 20.08.2015
(51) Int. Cl.: A01B 63/00, A01B 63/26, A01B 63/32, A01C 7/20

(54) **SÄMASCHINE**

(30) Priorität: 26.08.2014 DE 102014112160
(71) Anmelder: Amazonen-Werke H. Dreyer GmbH & Co. KG, 49205 Hasbergen (DE)
(72) Erfinder: Ammermann, Wilfried, 26203 Wadenburg (DE); Hoffmann, Karl-Peter, 27798 Hude (DE); Lücking, Florian, 26689 Godensholt (DE)

(57) **Zusammenfassung**

Sämaschine mit einem sich auf dem Boden über Laufräder abstützenden Rahmen (1), auf dem Rahmen angeordneten Vorratsbehälter und an dem hinteren Ende des Rahmens an diesem angeordneten Säschare (5) tragenden Scharbalken (4), der in höhenverstellbarer Weise über Verbindungselemente (2), denen Verstellelemente (14) zugeordnet sind, an dem Rahmen angeordnet ist. Um kurz bauende und einfach ausgestaltete Verbindungselemente für die Höhenverstellung des Scharbalkens zu schaffen, ist vorgesehen, dass die Verbindungselemente als Teleskopelemente (11, 12) ausgebildet sind, dass den Teleskopelementen die Stellelemente (14) zugeordnet sind.

## Beschreibung

Die Erfindung betrifft eine Sämaschine gemäß des Oberbegriffes des Patentanspruches 1.

Eine derartige Sämaschine ist in der DE 199 47 991 A1 beschrieben. Der Rahmen dieser Sämaschine stützt sich über Laufräder auf dem Boden ab. An dem hinteren Ende des Rahmens der Sämaschine ist über Verbindungselemente ein Scharbalken an dem Rahmen angeordnet. Diese Verbindungselemente sind als Dreipunktkupplung ausgebildet, wobei an zumindest einem der Lenker der Dreipunktkupplung ein Hydraulikzylinder angreift, über welchen die Lenker der Dreipunktkupplung und somit der Rahmen in höhenverstellbarer Weise für unterschiedliche Höhenlagen des Rahmens zu verstellen ist. An dem Scharbalken sind Säschare angeordnet. Um in die Säschare in optimaler Weise auf die jeweilige gewünschte Arbeitstiefe in Verbindung mit einer Schardruckverstellung einzustellen, wird der Scharbalken über die höhenverstellbaren Verbindungselemente in die jeweilige gewünschte Höhenlage gebracht.

Die Ausgestaltung der Verbindungselemente als Dreipunktkupplung mit entsprechenden nach hinten ragenden Lenkern baut relativ lang. Hierdurch wird der Schwerpunkt der gesamten Maschine in ungünstiger Weise nach hinten verschoben. Außerdem ist die Maschine aufgrund ihrer Länge schlechter zu manövrieren.

Der Erfindung liegt die Aufgabe zu Grunde, kurz bauende und einfach ausgestaltete Verbindungselemente für die Höhenverstellung des Scharbalkens zu schaffen.

Diese Aufgabe der erfindungsgemäß dadurch gelöst, dass die Verbindungselemente als Teleskopelemente ausgebildet sind, dass den Teleskopelementen die Stellelemente zugeordnet sind.

Infolge dieser Maßnahmen ergeben sich eine sehr einfach ausgestaltete Verbindungselemente, die extrem kurz bauen. Durch einfaches verlängern und verkürzen der Teleskopelemente lässt sich der Scharbalken auf die richtige Höhe für die gewünschte Arbeitstiefe der Säschare einstellen.

Um in einfacher und schneller Weise die Teleskopelemente in die richtige Position zueinander zu bringen, ist vorgesehen, dass die Teleskopelemente rohrförmig ausgebildet und die Stellelemente innerhalb der rohrförmige Teleskopelemente angeordnet sind.

Um von Schleppersitz aus oder über eine elektronische Ansteuervorrichtung in einfacher Weise die Stellelemente verstellen und/oder ansteuern zu können, ist vorgesehen, dass die Stellelemente motorisch, vorzugsweise als Hydraulikzylinder, Pneumatikzylinder oder Elektromotor ausgebildet sind.

Eine besonders einfache Ausgestaltung der als Teleskopelemente ausgebildeten Verbindungselemente mit sehr wenigen Bauteilen lässt sich dadurch erreichen, dass die Teleskopelemente gleichzeitig die Stellelemente, vorzugsweise Hydraulikzylinder oder Pneumatikzylinder sind.

Um eine optimierte Verstellung des Scharbalkens zu erreichen, ist vorgesehen, dass alle zwischen dem Scharbalken und dem Rahmen angeordneten Stellelemente zur Höhenverstellung des Scharbalkens synchron verstellbar und/oder betätigbar sind.

Weitere Einzelheiten der Erfindung sind der Beispielsbeschreibung und den Zeichnungen zu entnehmen. Die Zeichnungen zeigen
- Fig.1: die Anordnung des Scharbalkens über Teleskopelemente an dem hinteren Rahmenteil einer Sämaschine in perspektivischer Ansicht, wobei zur Einstellung einer relativ geringen Schartiefe die Teleskopelemente zueinander eingezogen sind,
- Fig.2: die Anordnung des Scharbalkens über Teleskopelemente an dem hinteren Rahmen Teil einer Sämaschine in perspektivischer Ansicht, wobei zur Einstellung einer relativ großen Schartiefe die Teleskopelemente auseinandergezogen sind,

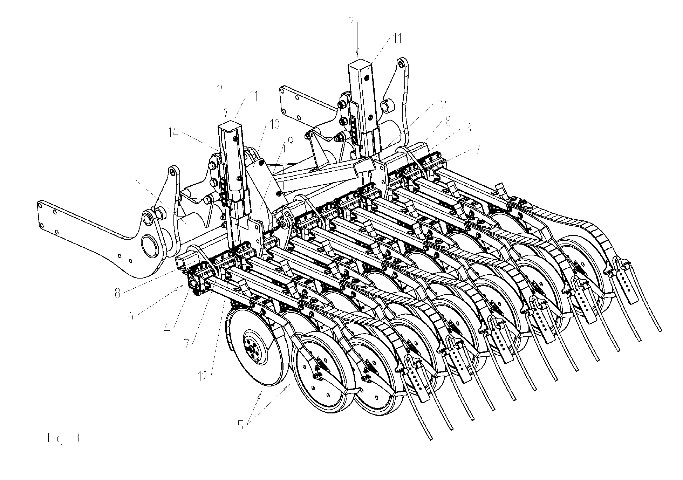

- Fig.3: eine weitere Anordnung des Scharbalkens über Teleskopelemente mit anders ausgebildeten Stellelementen an dem hinteren Rahmenteil einer Sämaschine in perspektivischer Ansicht, wobei zur Einstellung einer relativ geringen Schartiefe die Teleskopelemente zueinander eingezogen sind und

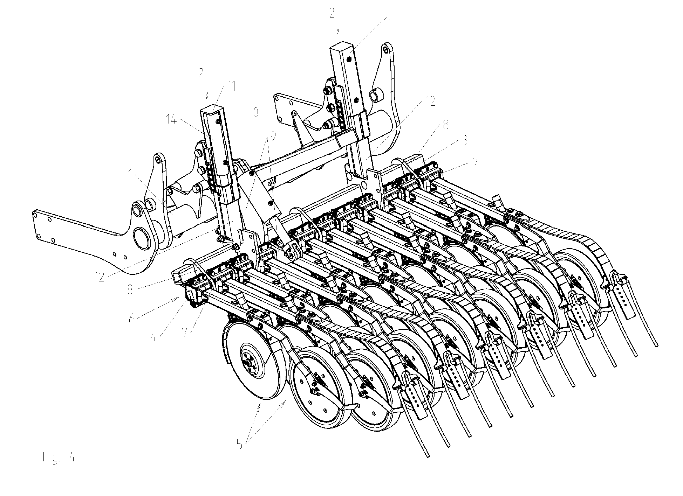

- Fig.4: die Anordnung des Scharbalkens über Teleskopelemente gemäß Fig. 3 mit an dem hinteren Rahmenteil einer Sämaschine in perspektivischer Ansicht, wobei zur Einstellung einer relativ großen Schartiefe die Teleskopelemente auseinandergezogen sind.

An dem hinteren Rahmenteil 1 der nicht weiter dargestellten Sämaschine ist über die beiden Verbindungselemente 2 und dem Zwischenbalken 3 der Scharbalken 4 angeordnet. An in dem Scharbalken 4 sind in beabstandeter und zueinander versetzter sowie bekannter Weise Säschare 5 mittels Gelenken 6 angeordnet. Der Scharbalken 4 ist mittels Drehgelenken 7 über Zwischenhalter 8 um seine Längsachse verdrehbar an dem Zwischenbalken 3 mittels eines zwischen dem Scharbalken 4 und dem Zwischenbalken 3 über Zwischenhebel 9 angeordneten Hydraulikzylinder 10 verdrehbar, so dass der auf die Säschare 5 einwirkende Schardruck einstellbar ist.

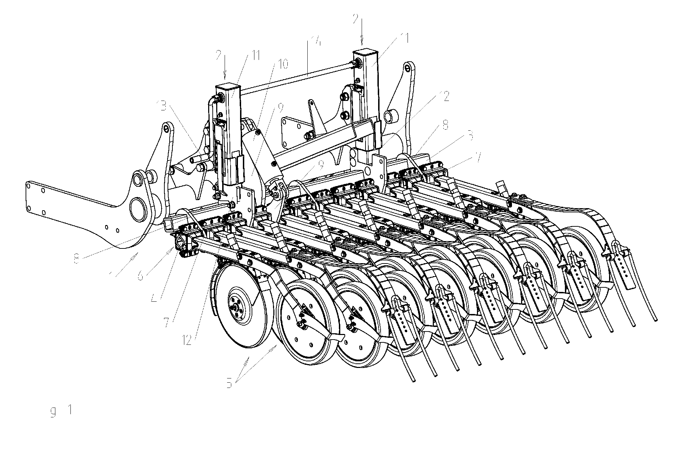

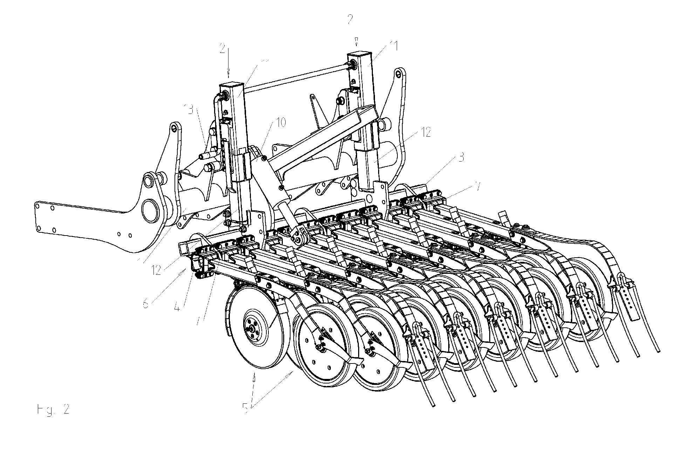

Die die als Teleskopelemente ausgebildeten Verbindungselemente 2 bestehen aus den ineinander verschiebbaren Rohren 11 und 12. Zwischen den Rohren 11 und 12 ist jeweils ein als Spindel ausgebildetes, nicht dargestelltes Verstellelement, welches über das Kurbelelement 13 zu betätigen ist, angeordnet. Hierdurch sind die Rohre 11 und 12 der Teleskopelemente 2 zwischen der in Fig.1 dargestellten eingezogenen Position und der in Fig.2 dargestellten ausgezogenen Position zu verstellen. Durch die Verbindung der beiden Spindeln durch die Verbindungsstange 14 zwischen dem beiden Teleskopelementen 2 können die Stellelemente zur Verstellung des Scharbalkens 4 synchron verstellt und/oder betätigt werden.

Die Ausgestaltung der als Teleskopelemente 2 ausgebildeten Verbindungselemente unterscheidet sich lediglich durch anders ausgebildete Stellelemente 14. In diesem Falle sind die Stellelemente als im Innenraum der Rohre 11, 12 der Teleskopelemente 2 angeordnete Hydraulikzylinder 14 ausgestaltet. Die Hydraulikzylinder sind über nicht dargestellte Hydraulikleistung einer Hydraulikanlage, beispielsweise die des die Sämaschine ziehenden Schleppers verbunden.

Die Stellelemente können auch als Pneumatikzylinder oder als durch einen Elektromotor betätigtes Stellglied ausgebildet sein.

## Patentansprüche

1. Sämaschine mit einem sich auf dem Boden über Laufräder abstützenden Rahmen (1), auf dem Rahmen (1) angeordneten Vorratsbehälter und an dem hinteren Ende des Rahmens (1) an diesem angeordneten Säschare (5) tragenden Scharbalken (4), der in höhenverstellbarer Weise über Verbindungselemente (2), denen Verstellelemente (14) zugeordnet sind, an dem Rahmen (1) angeordnet ist, **dadurch gekennzeichnet, dass** die Verbindungselemente (2) als Teleskopelemente (11,12) ausgebildet sind, dass den Teleskopelementen (11,12) die Stellelemente (14) zugeordnet sind.

2. Sämaschine nach Anspruch 1, **dadurch gekennzeichnet, dass** die Teleskopelemente (11,12) rohrförmig ausgebildet und die Stellelemente (14) innerhalb der rohrförmige Teleskopelemente (11,12) angeordnet sind.

3. Sämaschine nach zumindest einem der vorstehenden Ansprüche, **dadurch gekennzeichnet, dass** die Stellelemente motorisch, vorzugsweise als Hydraulikzylinder (14), Pneumatikzylinder oder Elektromotor ausgebildet sind.

4. Sämaschine nach zumindest einem der vorstehenden Ansprüche, **dadurch gekennzeichnet, dass** die Teleskopelemente (2, 11,12) gleichzeitig die Stellelemente, vorzugsweise Hydraulikzylinder (14) oder Pneumatikzylinder sind.

5. Sämaschine nach zumindest einem der vorstehenden Ansprüche, **dadurch gekennzeichnet, dass** alle zwischen dem Scharbalken (4) und dem Rahmen (1) angeordneten Stellelemente (14) zur Höhenverstellung des Scharbalkens (4) synchron verstellbar und/oder betätigbar sind.
